# EUROPÄISCHE PATENTSCHRIFT

(11) **EP 4 011 770 B1**
(45) Veröffentlichungstag und Bekanntmachung des Hinweises auf die Patenterteilung: **11.10.2023**
(21) Anmeldenummer: 21210288.3
(22) Anmeldetag: 24.11.2021
(51) Int. Cl.: B64C 29/00, B64D 27/00

(54) **LUFTFAHRZEUG MIT ELEKTROANTRIEB**
AIRCRAFT WITH ELECTRIC DRIVE
AVION À PROPULSION ÉLECTRIQUE

(30) Priorität: 10.12.2020 DE 202020005116 U
(43) Veröffentlichungstag der Anmeldung: 15.06.2022
(73) Patentinhaber: Eisenmann, Siegfried A., 88326 Aulendorf (DE)
(72) Erfinder: Eisenmann, Siegfried A., 88326 Aulendorf (DE)
(74) Vertreter: Kaminski Harmann

(56) Entgegenhaltungen:
- DE-U1-202017 006 138
- DE-U1-202019 000 936
- DE-U1-202019 002 731
- US-B1- 6 382 556

## Beschreibung

### GEBIET DER ERFINDUNG

Die vorliegende Erfindung betrifft ein elektrisch angetriebenes Luftfahrzeug für den Personentransport.

### HINTERGRUND DER ERFINDUNG

In großen Städten sind die Platzverhältnisse bekanntlich oft mangelhaft und so eignet sich ein Einsatz von Luftfahrzeugen zum Personentransport nur bedingt. Eine Voraussetzung scheint daher für solche Luftfahrzeuge der Senkrechtstart zu sein. Lufttaxis, wie sie in der Zukunft gefordert werden, müssen zudem in ihren Gesamtabmessungen möglichst klein bemessen sein.

Weitere Kriterien für ein solches Luftfahrzeug sind die Zulassung der Luftfahrtbehörden bezüglich der Flugsicherheit und die soziale Akzeptanz in der Bevölkerung. Im Vergleich zu PKW-Taxis sind die Sicherheitsanforderungen für die Beförderung von Personen im Luftraum, also nicht mehr auf der Straße, auf eine ungleich höhere Qualitätsstufe gestellt.

Besonders wichtig ist auch, dass der Fluggast nicht zusätzlich auch noch ein PKW-Taxi benötigt, um zum Startplatz des Luftfahrzeugs zu kommen. Das bedeutet, dass das Luftfahrzeug möglichst dorthin gelangen können muss, wo sich der Fluggast gerade befindet und dass der Platzbedarf zum Landen und Parken des Luftfahrzeugs möglichst klein sein muss. Somit liegt es in der Natur der Sache, dass ein solches Luftfahrzeug nur für wenige Personen konzipiert sein kann. Hinzu kommt, dass beim Senkrechtstart die erforderliche Startleistung nahezu mit dem Quadrat des Gesamtgewichts ansteigt und dass es somit zwingend notwendig ist, mit dem Gewicht und den Abmessungen äußerst sparsam umzugehen.

Aus dem Stand der Technik bekannte Konstruktionen von Luftfahrzeugen zum Personentransport haben oftmals eine drohnenartige Ausbildung mit permanent senkrechter Lastübernahme durch Propeller, wie sie aus den Windkraftanlagen bekannt sind. Die Tragkraft solcher Luftfahrzeuge hängt ausschließlich vom Axialschub dieser Propeller ab, was einen verhältnismäßig großen Aufwand an Antriebsleistung erfordert.

Soll ein solches Luftfahrzeug zusätzlich zu seiner Fähigkeit, die Last in einer gewissen Höhe in der Schwebe zu halten, auch vorwärts kommen, müssen die Axialkräfte zusätzlich eine Kraftkomponente in Richtung der Fluggeschwindigkeit, d.h. eine waagerechte Komponente, haben. Diese Komponente der Drehflügel muss mindestens so groß sein wie der Luftwiderstand des gesamten Systems in Flugrichtung. Die Folge ist, dass sich das Luftfahrzeug in Flugrichtung nach vorne neigen muss, um diese Luftwiderstandkraft zu erzeugen. Man kann dies bei jedem Helikopter beobachten. Diese haben allerdings zusätzlich eine zyklische Blattverstellung, weshalb Helikopter sehr aufwendige Konstruktionen aufweisen. Für einen reinen Elektroantrieb aus einem Batteriesystem kommen solche Lösungen wegen des hohen Leistungsaufwands nicht infrage.

Wegen der begrenzten Elektroenergiekapazität einer Antriebsbatterie (aus Abmessungs- und Gewichtgründen) ist darauf zu achten, dass insbesondere die Startleistung der Propeller insgesamt so niedrig wie möglich ist. Für die Flugstreckenreichweite ist es ebenso wünschenswert, dass die Flugwiderstandsleistung klein ist.

Bekannt sind deshalb ebenfalls Luftfahrzeuge mit einer Kombination aus Windkraftrotoren und den in der Flugtechnik altbekannten, äußerst zuverlässigen und leistungssparenden Tragflügeln. Der Luftwiderstand eines gut ausgelegten, einen großen Auftrieb erzeugenden Tragflügels ist viel kleiner. Solche Luftfahrzeuge sind zum Beispiel der DE202017006138U1, der DE202019000936U1 und der DE202019002731U1 zu entnehmen.

Die darin gezeigten Luftfahrzeuge haben sogenannte "Tiltflügel" (d.h. Tragflügelteile, die sich neigen lassen) und an diesen jeweils befestigte "Tiltrotoren" (d.h. Propeller) wodurch eine sinnvolle Trennung des Steigfluges (vertikal) und des Geschwindigkeitsfluges (horizontal) ermöglicht ist, und damit ein wirtschaftlicher Flugbetrieb mit reinem Elektroantrieb: Für eine möglichst große Reichweite der Batteriekapazität wird im Geschwindigkeitsflugbetrieb der notwendige Auftrieb von den Tragflügeln übernommen. Die Tiltrotoren müssen dann nur noch den Vorschub aufbringen als Produkt aus Luftwiderstand mal der Fluggeschwindigkeit. Diese Flugleistung ist dann geringer als 20% der Steigleistung beim Vertikalstart.

### AUFGABE DER ERFINDUNG

Eine der bedeutenderen Gefahren bezüglich der Flugsicherheit bei Luftfahrzeugen mit Elektroantrieb sind die Batterien als Energiespeicher. Deshalb ist eine Dezentralisierung bei der Anordnung der Batterien dringend notwendig.

Im Rahmen der vorliegenden Erfindung wird daher vorgeschlagen, bei einem Luftfahrzeug die Anordnung des Energiespeichers zu dezentralisieren und die Batterien in kleinere Einheiten aufzuteilen. Damit erhält auch die Verpackung der Batteriezellen eine größere Oberfläche, sodass zudem die Gefahr der Überhitzung und der Kühlungsaufwand kleiner werden.

### ZUSAMMENFASSUNG DER ERFINDUNG

Die Erfindung betrifft ein Luftfahrzeug geeignet zum Vertikalflug und zum Horizontalflug, wobei das Luftfahrzeug eine Passagierkabine und einen sich beidseitig an ein Dach der Passagierkabine anschließenden Tragflügel mit zumindest vier Tragflügelteilen aufweist, wobei jeder der Tragflügelteile relativ zum restlichen Tragflügel um eine jeweilige Schwenkachse nach unten und vermittels der auf das Tragflügelteil wirkenden Schwerkraft ausschwenkbar ausgebildet sind, wobei jeder der Tragflügelteile folgendes aufweist:
(a) zumindest einen Propeller, der im Tragflügelteil rotierbar um eine Rotationsachse gelagert ist und der in Bezug auf die Schwenkachse gegenüber zumindest einem Großteil des Tragflügelteils angeordnet ist, wobei der Propeller im Wesentlichen senkrecht zu einer Profilsehne des Tragflügelteils steht,
(b) einen Propellermotor ausgebildet zur Rotation des Propellers, (c) ein erstes Planetenradgetriebe zur Wirkverbindung zwischen dem Propeller und dem Propellermotor, (d) eine Seilwinde ausgebildet zur Rückstellung der Ausschwenkung des Tragflügelteils indem die Seilwinde zum Abwickeln eines Seils ausgebildet ist, wobei ein erstes Seilende an der Seilwinde und ein zweites Seilende am restlichen Tragflügel befestigt ist, (e) einen Schrittmotor ausgebildet zum Antrieb der Seilwinde, (f) zumindest eine Antriebsbatterie ausgebildet zur Versorgung des Propellermotors und des Schrittmotors mit elektrischer Energie, wobei die Antriebsbatterie so im oder am Tragflügelteil angeordnet ist, dass sie dort austauschbar und/oder aufladbar ist, (g) eine Kommunikationseinheit ausgebildet zum Empfang von Regelsignalen, und (h) eine Regeleinheit ausgebildet, jeweils in Abhängigkeit von den Regelsignalen, zum Regeln eines Schwenkwinkels des Tragflügelteils und zum Regeln der Rotation des Propellers.

In manchen Ausführungsformen ist jeder der Tragflügelteile im Wesentlichen halbkreisförmig ausgestaltet, sodass sich durch ein Ausschwenken des jeweiligen Tragflügelteils eine halbkreisförmige Aussparung im restlichen Tragflügel ergibt.

In manchen Ausführungsformen ist zur Wirkverbindung zwischen dem Schrittmotor und der Seilwinde ein zweites Planetenradgetriebe angeordnet.

In manchen Ausführungsformen ist das erste Planetenradgetriebe zweistufig ausgebildet.

In manchen Ausführungsformen weist das Luftfahrzeug weiterhin einen Kühlmittelkreislauf mit Kühlmittelpumpe auf, wobei der Kühlmittelkreislauf angeordnet ist zum Kühlen von zumindest einem aus: der Antriebsbatterie, des Propellermotors, der Regeleinheit und des Schrittmotors, und wobei die Antriebsbatterie zur Versorgung der Kühlmittelpumpe mit elektrischer Energie ausgebildet ist.

In manchen Ausführungsformen weisen die Tragflügelteile auf ihren Oberflächen zumindest eine photovoltaische Zelle auf, die mit der Antriebsbatterie verbunden ist und zum Aufladen der Antriebsbatterie ausgebildet ist.

In manchen Ausführungsformen sind die Tragflügelteile um bis zu 90 Grad um die Schwenkachse nach unten ausschwenkbar.

In manchen Ausführungsformen sind ein erster Tragflügelteil und ein zweiter Tragflügelteil in einem Frontbereich des Tragflügels, und ein dritter Tragflügelteil und ein vierter Tragflügelteil in einem Heckbereich des Tragflügels angeordnet, wobei der erste Tragflügelteil und der dritte Tragflügelteil zu einer ersten Seite bezüglich der Passagierkabine hin und der zweite Tragflügelteil und der vierte Tragflügelteil zu einer der ersten Seite gegenüberliegenden zweiten Seite bezüglich der Passagierkabine hin angeordnet sind.

In manchen Ausführungsformen weisen zumindest der dritte Tragflügelteil und der vierte Tragflügelteil an einer jeweiligen Stirnseite jeweils ein Fahrwerksrad auf, welche Stirnseiten für einen vertikalen Startvorgang und einen vertikalen Landevorgang dadurch gen Nadir gerichtet ist, dass der jeweilige Tragflügelteil voll ausgeschwenkt ist.

In manchen Ausführungsformen ist die Kommunikationseinheit dazu ausgebildet, Regelsignale von einer externen Sendequelle zu empfangen.

In manchen Ausführungsformen weist das Luftfahrzeug weiterhin eine in der Passagierkabine angeordnete Sendeeinheit auf, wobei die Kommunikationseinheit dazu ausgebildet ist, Regelsignale von der Sendeeinheit zu empfangen.

In manchen Ausführungsformen ist die Sendeeinheit dazu ausgebildet, zumindest eines aus: Regelsignalen, Antikollisionssystem-Warnsignalen, Wetterinformationssignalen, Navigationssignalen von einer externen Sendequelle zu empfangen.

In manchen Ausführungsformen weisen die Tragflügelteile zur Steifigkeitserhöhung in ihrem Inneren eine Zellenstruktur auf, wobei die Antriebsbatterie in einer Zelle der Zellenstruktur angeordnet ist.

In manchen Ausführungsformen weist die Passagierkabine eine Versorgerbatterie auf, wobei der restliche Tragflügel auf seiner Oberfläche zumindest eine photovoltaische Zelle aufweist, die mit der Versorgerbatterie verbunden ist und zum Aufladen der Versorgerbatterie ausgebildet ist.

In manchen Ausführungsformen sind der Propellermotor des dritten Tragflügelteils und der Propellermotor des vierten Tragflügelteils dazu ausgebildet, für den Horizontalflug ihre Rotationsrichtung umzukehren.

Mit anderen Worten betrifft die Erfindung ein Universalflugerät ("universal", weil es vertikal und horizontal fliegen kann) mit Elektroantrieb und Tiltflügeln, wobei jeder Tiltflügel sein eigenes Traktionssystem besitzt, bestehend aus Propellerflügel, Planetengetriebe, Elektromotor, Verstellseilwinde, Traktionsbatterie, Leistungselektronik, scharnierartigen Tiltgelenken und wobei dieses Traktionssystem über Funk vom Cockpit aus und/oder vom Boden aus gesteuert werden kann.

In anderen Worten ausgedrückt sind in manchen Ausführungsformen die elektrischen Antriebsmotoren für die Propeller und die Elemente für die Verstellung der schwenkbaren, halbkreisförmigen Tragflächenteile ausschließlich in den schwenkbaren Tragflächenanteilen untergebracht, damit sie durch deren Gewichtswirkung ein stabiles Drehmoment bezüglich der Rotationsachse der Tiltrotoren erzeugen.

In anderen Worten ausgedrückt ist in manchen Ausführungsformen die Verstellbarkeit des Tiltflügels gewährleistet durch eine im oder am Tiltflügel angeordnete Seilwinde, über deren Seiltrommel ein Seil gewunden ist. Gedreht wird die Seiltrommel von einem elektrischen Schrittmotor mit hohem Haltemoment, sodass der Tiltwinkel jedes Tiltflügels unabhängig eingestellt werden kann. Im Gegensatz zu der feststehenden Lage der Triebwerke bei einem reinen Tragflächenflugzeug kann hier der Steigwinkel der Tragflächen von den verstellbaren Triebwerken bestimmt und mit großer Kraft gesteuert werden. Deshalb kommt man hier ohne die am Heck von Tragflächenflugzeugen notwendigen Leitwerke aus. Das Seil ist mit dem einen Ende an der Seilwinde und mit dem anderen Ende am feststehenden Teil der Tragfläche, also am restlichen Tragflügel ("restlicher Tragflügel" gleich "Tragflügel" minus "Tragflügelteile") befestigt, sodass sich der Tiltflügel selbst am Seil aus der senkrechten Stellung in die waagerechte Flugstellung winden kann.

Insbesondere ist für das erforderliche Drehmoment der verhältnismäßig großen Propeller, etwa mit einem Durchmesser von 3 Metern, bei niedriger Drehzahl ein Planetengetriebe mit z.B. einer Gesamtübersetzung von i = 36 und ein hochdrehender Gleichstrommotor mit über 25000 U/min im Tiltflügel vorgesehen. Bei vier Propellern liegt die Gesamtleistung damit beispielsweise bei 100 KW und das Gesamtgewicht ca. 900 kg.

Für die Kühlung der Motoren und des Planetengetriebes ist insbesondere eine Olumwälzpumpe vorgesehen, die das Kühlmittel ständig durch das Getriebe und den Motor leitet, vorbei an den durch den Luftstrom gekühlten Oberflächen der Tragflügel.

In weiteren Ausführungsformen ist auf die Außenhaut zumindest eines von: den Propellern, der Passagierkabine, den Tragflügelteilen und dem restlichen Tragflügel eine metallisch wirkende Schicht aufgetragen, die eine elektrostatische Aufladung und Blitzschlag (Faradaykäfig) und eine Eisbildung verhindert.

In weiteren Ausführungsformen ist über einen Kreiselkompass in der Passagierkabine eine Fluglagenanzeige für die Nickbewegung und Seitenneigung sowie eine Fluggeschwindigkeits-Anzeige vorgesehen.

In weiteren Ausführungsformen ist im Cockpit eine Anzeige für den Status (z.B. Ladezustand, Temperatur) der Traktionsbatterie vorgesehen.

### KURZE BESCHREIBUNG DER ZEICHNUNGEN

Weitere Vorteile der vorliegenden Erfindung sind aus der detaillierten Beschreibung und den Zeichnungen ersichtlich.
Figur 1 ist eine perspektivische Ansicht einer Ausführungsform des Luftfahrzeugs gemäß der vorliegenden Erfindung;
Figur 2 zeigt das Luftfahrzeug aus Figur 1 von oben;
Figur 3 zeigt Luftfahrzeug aus den Figuren 1 und 2 in einer Schnittdarstellung bei völlig ausgeschwenkten Tragflügelteilen;
Figur 4 zeigt eine detailliertere Schnittdarstellung des in Figur 3 gestrichelt markierten Bereichs;
Figur 5 zeigt eine detailliertere Schnittdarstellung des in Figur 2 gestrichelt markierten Bereichs;
Figur 6 zeigt eine Schnittdarstellung eines beispielsweise in Ausführungsformen des Luftfahrzeugs gemäß der vorliegenden Erfindung verwendeten Planetenradgetriebes für den Propellerantrieb;
Figur 7 zeigt eine seitliche Ansicht einer Ausführungsform des Luftfahrzeugs gemäß der vorliegenden Erfindung im Stand bzw. kurz vor dem Start oder kurz nach der Landung;
Figur 8 zeigt eine seitliche Ansicht einer Ausführungsform des Luftfahrzeugs gemäß der vorliegenden Erfindung im Horizontalflug;

### DETAILLIERTE BESCHREIBUNG DER ZEICHNUNGEN

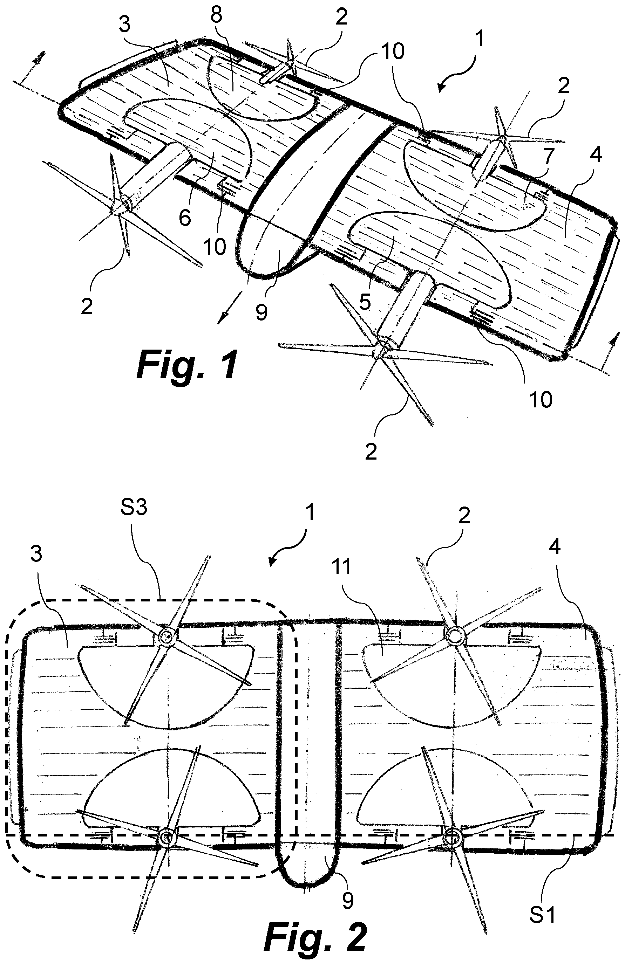

Figur 1 zeigt in perspektivischer Darstellung von schräg oben das gesamte Luftfahrzeug 1 mit den vier Propellern 2 (oder hierin auch teilweise Tiltrotoren genannt), mit der sich beidseitig der Passagierkabine 9 erstreckenden Tragfläche 3, 4 und mit den halbkreisförmigen Tiltflügeln 5, 6, 7 und 8. Die Passagierkabine 9 ist insbesondere für die Aufnahme von mindestens einer Person, bevorzugt für zwei oder mehr Personen ausgelegt. Falls eine entsprechende Steuerung über Funk vorgesehen ist, so kann unter Umständen auf einen menschlichen Pilot verzichtet werden, wodurch ein weiterer Fahrgast transportiert werden kann. Insbesondere ausgestattet mit einem längs und quer arbeiteten Kreiselkompass, einem Höhenmessgerät und mit einem satellitengesteuerten Navigationssystem kann ein solches Universalflugzeug völlig autonom betrieben werden. Andererseits kann zumindest basierend auf einem Navigationssystem (z.B. GPS) einem sich im Luftfahrzeug 1 befindlichen Piloten etwa angezeigt werden, wie weit es noch bis zur Zielposition ist. Hier kann eine Vorwarnung (z.B. "Ziel erreicht in 4 km oder 2 min") den Piloten darauf aufmerksam machen,

Die Tragflügelteile 5-8 sind jeweils über ein scharnierartiges Gelenk 10 im feststehenden (restlichen) Tragflügel 3,4 um 90 Grad schwenkbar gelagert. Sie haben die Aufgabe, die Kräfte der Rotorpropeller 2 auf das übrige System zusammen mit der Passagierkabine 9 zu übertragen. Diese Gelenke 10 müssen hochtragfähig, weitgehend verschleißfrei und mit sehr wenig Reibungswiderstand über viele Jahre zuverlässig arbeiten. Deshalb sind sie bevorzugt mit Rollenlagern, insbesondere mit raumsparenden Nadellagern versehen. Sie können mit einer Lebensdauer-Fettfüllung geschmiert sein.

Die Verstellung dieser Tiltflügel (Tragflügelteile) 5-8 geschieht jeweils mit einem Seilzug, der in bekannter Weise mit einer Seilrolle gezogen und wieder losgelassen werden kann. Zur Betätigung des Seilzugs dient ein elektrischer Schrittmotor, der entweder vom Cockpit aus oder automatisiert betätigt wird. Auch dieser Schrittmotor kann über ein Untersetzungsgetriebe verfügen, beispielsweise ein Planetenradgetriebe. Unabhängig von der Existenz eines zwischengeschalteten Getriebes stellt die Verstellung eines jeweiligen Tragflügelteils vermittels einer solchen Seilwinde eine ideal Lösung dar, da somit die gewaltigen Kreiselkräfte der hochdrehenden Propellermotoren überwunden werden können.

Figur 2 zeigt das Luftfahrzeug 1 von oben, wobei die Tiltflügel 5-8 ganz ausgeschwenkt sind und die Propeller 2 nach oben ausgerichtet sind, dies für den Vertikalflug. Das vollständige Ausschwenken legt jeweils halbkreisförmige Aussparungen bzw. Durchbrüche 11 in dem restlichen Tragflügel 3,4 offen, damit der Jetstrom der Propeller-Luft durch die Tragflügel ungehindert nach unten strömen kann.

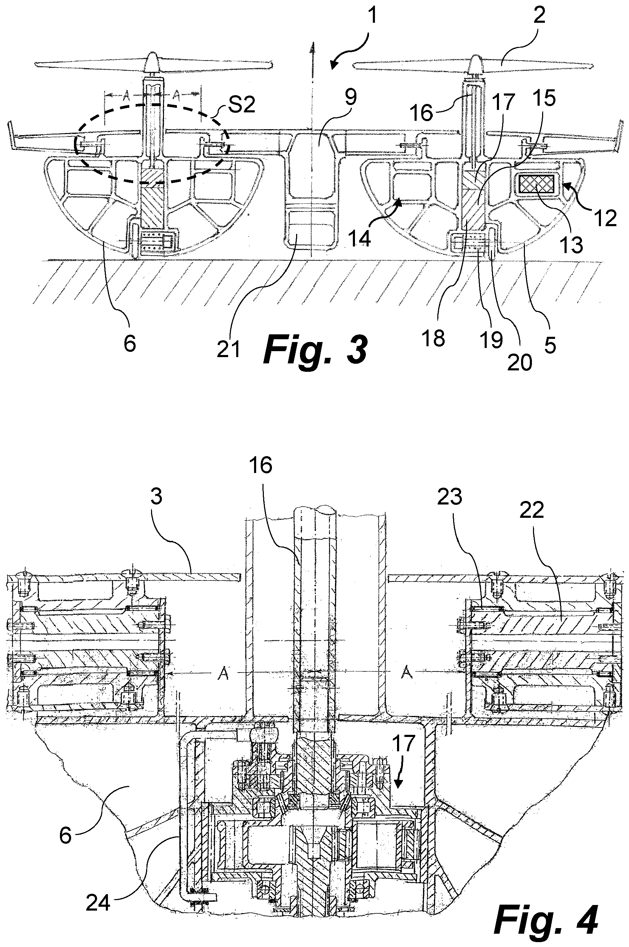

Figur 3 zeigt das Luftfahrzeug 1 von vorn in einer Schnittdarstellung entsprechend der Markierung S1 in Figur 2. Zu sehen ist hier eine Zellenstruktur im Tragflügelteil, wobei insbesondere die sich dabei rechteckig ergebende Kammer 12 sich für die Antriebsbatterie 13 eignet. Selbstverständlich können weitere, insbesondere insgesamt zwei Antriebsbatterien pro Tragflügelteil vorgesehen sein, etwa in der Zelle 14. Die Antriebsbatterie 13 ist insbesondere als Feststoffbatterie ausgeführt.

Für diese steifigkeitserhöhende Struktur eignet sich ganz besonders ein Leichtbaumaterial wie etwa ein Karbonwerkstoff oder andere Faserverbundstoffe. In den diversen Zellen, die sich bei einer solchen Struktur ergeben, können die einzelnen benötigten Komponenten je Tragflügelteil untergebracht sein. Dies betrifft insbesondere die Leistungselektronik, die zum Antrieb des Propellermotors 15, der insbesondere als hochdrehender, elektronisch kommutierter Gleichstrommotor ausgeführt ist, nötig ist. Die Kommunikationseinheit und die Regeleinheit sind ebenfalls im jeweiligen Tragflügelteil angeordnet. Der Propeller 2 ist über die Welle 16 und das Planetenradgetriebe 17 mit dem Motor 15 verbunden. Die Welle 16 kann insbesondere als Hohlwelle ausgeführt sein, die am äußeren Ende auf der Propellerseite radial gelagert ist.

Dadurch, dass die Motoren 15 der einzelnen Tragflügelteile 5-8 derart hoch drehen (z.B. 20000 Umdrehungen pro Minute), entsteht gar eine selbststabilisierende Wirkung. Zusammen mit dem Rotorflügel und dem Planetengetriebe entsteht ein sehr hohes Kreiselmoment über deren Drehmassen. Dieses Kreiselmoment stabilisiert das Fluggerät gegenüber äußeren Störkräfte wie zum Beispiel Windböen und Luftlöchern. Hochdrehende Motoren sparen auch zusätzlich Gewicht ein. Die Untersetzung, d.h. die Übersetzung mit Verhältnis <1, des Motors bewirkt einen Propellerantrieb mit erhöhtem Drehmoment.

Ein besonders wichtiger Aspekt der vorliegenden Erfindung ist die Dezentralisierung der Antriebsbatterien 13. Es gibt damit nicht nur eine einzelne, große elektrische Energiequelle für die viert Propeller, sondern die Antriebsbatterie ist auf diese Verteilt, womit die Energiedichte bezogen auf das gesamte Luftfahrzeug verringert wird und somit die Gefahr von Überhitzung auf ein Minimum verringert wird.

Eine Kühleinrichtung 18 für den Motor 15, insbesondere auch für das Getriebe 17 und potentiell weitere Komponenten, kann im selben Kompartiment angeordnet sein wie der Motor 15. Allerdings würden hierfür auch andere Zellen innerhalb des Tragflügelteils zur Verfügung stehen. Die Kühleinrichtung weist einen Kühlmittelkreislauf und insbesondere eine Innen-Zahnradpumpe auf.

Die Seiltrommel 19 weist insbesondere eine insbesondere innen angeordnetes Planetengetriebe auf. Wie diese Ausführungsform zeigt, kann axial dazu angeordnet ein Fahrwerksrad 20 vorgesehen sein. Insbesondere für die hinteren Tragflügelteile 7 und 8 ist in manchen Ausführungsformen ein solches Fahrwerksrad 20 vorgesehen zum Manövrieren an der Start- bzw. Landestelle. Die vorderen Tragflügelteile 5 und 6 können solche Räder 20 auch haben, allerdings ist auch ein einfacher Fuß, beispielsweise aus Gummi oder Kunststoff, möglich, wie mit den letzten beiden Figuren erläutert wird.

Das Luftfahrzeug 1 steht oder fliegt sehr lange Zeit unter intensiver Sonneneinstrahlung. Somit bietet es sich an, beides, die feststehenden Tragflächen 3 und 4 als auch die Oberflächen der Tiltflügel 5-8 mit Dünnschicht-Photovoltaik-Elementen zu beschichten. Damit können die Versorgerbatterie 21 an Bord und die Traktionsbatterien 13 aufgeladen werden. Die Qualitäten als "Range-Extender" sind dabei beachtlich. Im Extremfall kann beispielsweise die Reichweite damit um 40 % vergrößert werden, bzw. kann die Antriebsbatterie entsprechend kleiner dimensioniert werden.

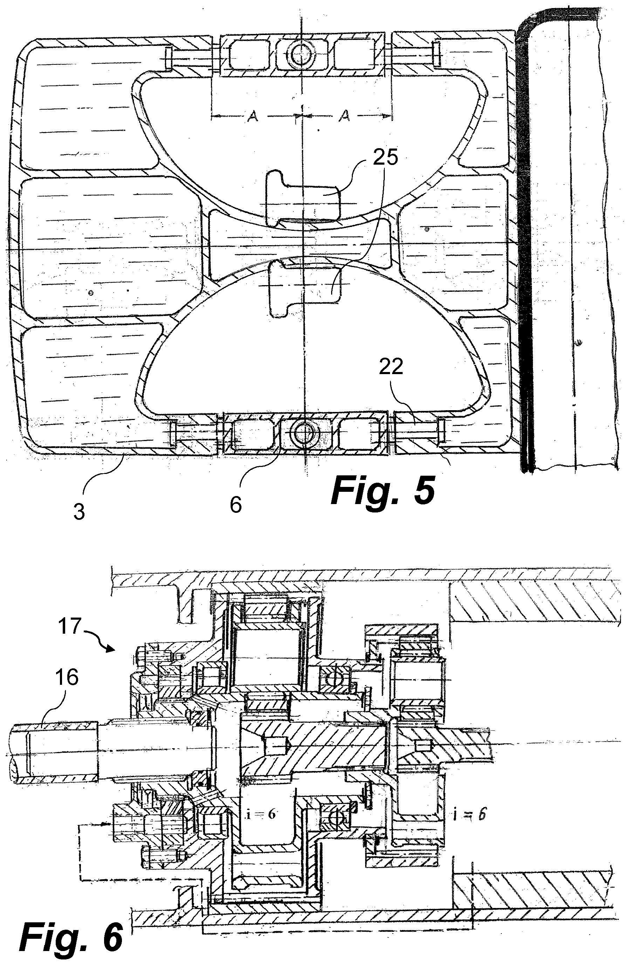

Figur 4 zeigt im Detail den mit S2 markierten Bereich in Figur 3. Die Lagerung der Tragflügelteile im restlichen Tragflügel ähnelt einem Scharniergelenk. Die mit dem Tragflügelteil 6 verbundenen Wellen 22 sind mit Nadellagern 23 am restlichen Tragflügel 3 gelagert. Zu sehen ist hier auch das Planetenradgetriebe 17 (Detailansicht in Figur 6), welches die Propellerwelle 16 gegenüber dem Propellermotor untersetzt, und der Kühlmittelkreislauf 24, welcher an eine Innenzahnradpumpe angeschlossen ist.

Figur 5 zeigt im Detail einen Schnitt durch den mit S3 markierten Bereich in Figur 2. Die Umrisse 25 zeigen die Endposition der Seilwinde 19 und des Fahrwerkrads 20 während eines Vertikalfluges, d.h. wenn die Tragflächenteile bündig mit der restlichen Tragfläche eingefahren sind. Wie hier sichtbar, kann ebenfalls der restliche Tragflügel 3,4 eine Zellstruktur haben zur Steifigkeitserhöhung.

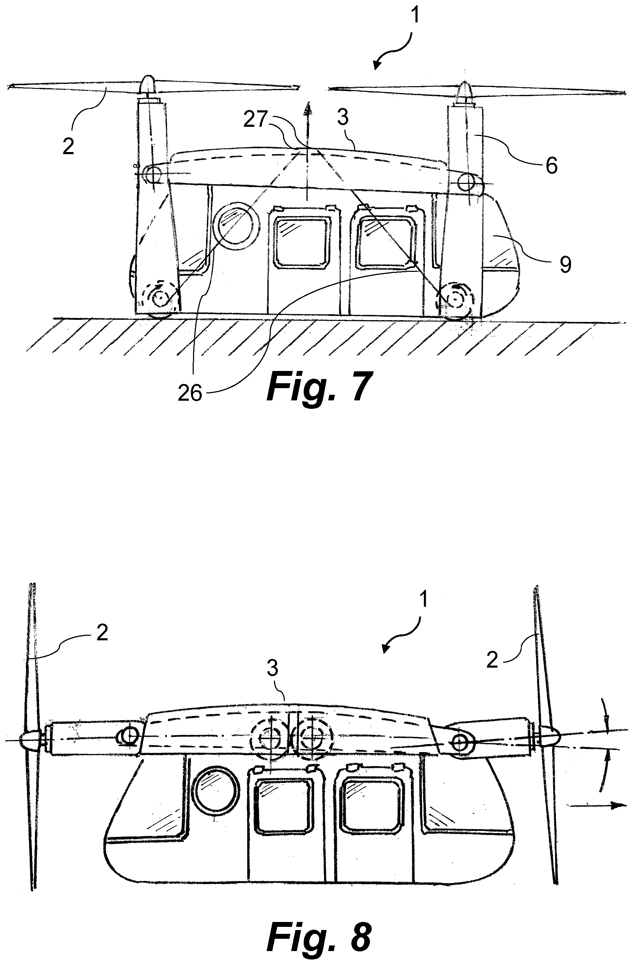

Figur 7 zeigt das Luftfahrzeug 1 in der Parkposition. Zu sehen sind hier insbesondere die ganz ausgerollten Seile 26 der Seilwinden und deren Befestigung 27 am restlichen Tragflügel 3. Es ist erwünscht, dass das geparkte Luftfahrzeug an seinem Standort leicht am Boden bewegt werden kann. Die auf der Achse des Schrittmotors der Seilwinde 19 vorgesehenen Laufrollen 20 stehen allerdings mit dem Schrittmotor in keiner Drehmomentverbindung. Die Beweglichkeit ergibt sich vielmehr dadurch, dass der Pilot mittels der Propeller der vorderen Tragflügelteile 5 und 6 die vorderen Rollen vom Boden abhebt. Die Heckrollen bleiben belastet, sind aber frei beweglich, sodass dort das Luftfahrzeug 1 am Boden heckseitig geführt bleibt. Durch leichtes Verstellen der Tragflügelteile 5 und 6 nach vorn vermittels der Seilwinde entsteht eine waagerechte Kraftkomponente nach vorne, sodass sich das Luftfahrzeug nach vorn in Bewegung setzt. Eine Kurvenfahrt ergibt sich dann durch unterschiedliche Drehzahlen der Frontpropeller oder unterschiedliche Schwenkwinkel der Front-Tragflügelteile. Entsprechende Vorgänge in umgekehrter Weise (Heck/Front) können auch eine Rückwärtsfahrt ermöglichen. Dies hat Vorteile, wenn die Passagiere schwere Gepäckstücke mit sich führen und der Pilot diese an einer gewissen Stelle einladen möchte.

Figur 8 zeigt das Luftfahrzeug 1 im Horizontalflug. Die Seilwinden haben die Seile ganz aufgerollt und die Tragflügelteile sind bündig eingefahren. Beim Übergang vom Senkrechtflug (Start) zum Waagerechtflug muss die Drehrichtung der Heck-Propellerrotoren umgekehrt werden, da sonst der Luftstrom in die verkehrte Richtung strömt. Diese Drehrichtungs-Umkehrung ist bei elektronisch kommutierten Gleichstrommotoren trivial umzusetzen. Dabei werden die Heckmotoren zu Schubschrauben und unterstützen bei ausreichend hoher Drehzahl die Frontmotoren zur Überwindung des Luftwiderstandes des Luftfahrzeugs. Optional zur Umkehr der Drehrichtung der Heckrotoren kann zwischen der Propellerwelle und dem Planetengetriebe eine Freilaufkupplung zwischengeschaltet sein, sodass beim Waagerechtflug die Elektromotoren zum Energiesparen stillstehen können.

Der Übergang vom Senkrecht- zum Waagerechtflug ist zweifellos die kritischste Phase der Flugsicherheit eines solchen Luftfahrzeugs. Hier sind die aerodynamischen Kräfte aufgeteilt in solche aus den Propellerrotoren 2 und solche aus dem feststehenden Tragflügel 3,4. Zugleich sind sie aufgeteilt in senkrechte und waagrechte Kraftkomponenten. Außerdem haben die Luftströme unterschiedliche Geschwindigkeitsrichtungen, sodass die aerodynamischen Kräfte nicht mehr in ihrer Wirkung eindeutig sind. Deshalb werden diese Verhältnisse auf dem Prüfstand im Windkanal im Vorhinein ermittelt und bei der Steuerung des Luftfahrzeugs berücksichtigt.

Die Erfindung wurde zwar anhand ihrer bevorzugten Ausführungsform(en) erläutert, doch es können viele weitere Änderungen und Variationen vorgenommen werden, ohne über den Umfang der vorliegenden Ansprüche hinauszugehen.

## Patentansprüche

1. Luftfahrzeug (1) geeignet zum Vertikalflug und zum Horizontalflug, wobei das Luftfahrzeug eine Passagierkabine (9) und einen sich beidseitig an ein Dach der Passagierkabine anschließenden Tragflügel (3,4,5,6,7,8) mit zumindest vier Tragflügelteilen (5,6,7,8) aufweist, wobei jeder der Tragflügelteile relativ zum restlichen Tragflügel (3,4) um eine jeweilige Schwenkachse nach unten und vermittels der auf das Tragflügelteil wirkenden Schwerkraft ausschwenkbar ausgebildet sind, **dadurch gekennzeichnet, dass** jeder der Tragflügelteile (5,6,7,8) folgendes aufweist:
zumindest einen Propeller (2), der im Tragflügelteil rotierbar um eine Rotationsachse gelagert ist und der in Bezug auf die Schwenkachse gegenüber zumindest einem Großteil des Tragflügelteils angeordnet ist, wobei der Propeller im Wesentlichen senkrecht zu einer Profilsehne des Tragflügelteils steht,
einen Propellermotor (15) ausgebildet zur Rotation des Propellers,
ein erstes Planetenradgetriebe (17) zur Wirkverbindung zwischen dem Propeller und dem Propellermotor,
eine Seilwinde (19) ausgebildet zur Rückstellung der Ausschwenkung des Tragflügelteils indem die Seilwinde zum Abwickeln eines Seils (26) ausgebildet ist, wobei ein erstes Seilende an der Seilwinde und ein zweites Seilende am restlichen Tragflügel befestigt ist (27),
einen Schrittmotor ausgebildet zum Antrieb der Seilwinde,
zumindest eine Antriebsbatterie (13) ausgebildet zur Versorgung des Propellermotors und des Schrittmotors mit elektrischer Energie, wobei die Antriebsbatterie so im oder am Tragflügelteil angeordnet ist, dass sie dort austauschbar und/oder aufladbar ist,
eine Kommunikationseinheit ausgebildet zum Empfang von Regelsignalen, und
eine Regeleinheit ausgebildet, jeweils in Abhängigkeit von den Regelsignalen,
zum Regeln eines Schwenkwinkels des Tragflügelteils und
zum Regeln der Rotation des Propellers.

2. Luftfahrzeug (1) nach Anspruch 1, wobei jeder der Tragflügelteile (5,6,7,8) im Wesentlichen halbkreisförmig ausgestaltet ist, sodass sich durch ein Ausschwenken des jeweiligen Tragflügelteils eine halbkreisförmige Aussparung (11) im restlichen Tragflügel ergibt.

3. Luftfahrzeug (1) nach einem der vorangehenden Ansprüche, wobei zur Wirkverbindung zwischen dem Schrittmotor und der Seilwinde ein zweites Planetenradgetriebe angeordnet ist.

4. Luftfahrzeug (1) nach einem der vorangehenden Ansprüche, wobei das erste Planetenradgetriebe (17) zweistufig ausgebildet ist.

5. Luftfahrzeug (1) nach einem der vorangehenden Ansprüche, weiterhin aufweisend einen Kühlmittelkreislauf (24) mit Kühlmittelpumpe, wobei der Kühlmittelkreislauf angeordnet ist zum Kühlen von zumindest einem aus: der Antriebsbatterie (13), des Propellermotors (15), der Regeleinheit und des Schrittmotors, und wobei die Antriebsbatterie zur Versorgung der Kühlmittelpumpe mit elektrischer Energie ausgebildet ist.

6. Luftfahrzeug (1) nach einem der vorangehenden Ansprüche, wobei die Tragflügelteile (5,6,7,8) auf ihren Oberflächen zumindest eine photovoltaische Zelle aufweist, die mit der Antriebsbatterie (13) verbunden ist und zum Aufladen der Antriebsbatterie ausgebildet ist.

7. Luftfahrzeug (1) nach einem der vorangehenden Ansprüche, wobei die Tragflügelteile (5,6,7,8) um bis zu 90 Grad um die Schwenkachse nach unten ausschwenkbar sind.

8. Luftfahrzeug (1) nach einem der vorangehenden Ansprüche, wobei ein erster Tragflügelteil (5) und ein zweiter Tragflügelteil (6) in einem Frontbereich des Tragflügels, und ein dritter Tragflügelteil (7) und ein vierter Tragflügelteil (8) in einem Heckbereich des Tragflügels angeordnet sind, wobei der erste Tragflügelteil und der dritte Tragflügelteil zu einer ersten Seite (4) bezüglich der Passagierkabine (9) hin und der zweite Tragflügelteil und der vierte Tragflügelteil zu einer der ersten Seite gegenüberliegenden zweiten Seite (3) bezüglich der Passagierkabine (9) hin angeordnet sind.

9. Luftfahrzeug (1) nach Anspruch 8, wobei zumindest der dritte Tragflügelteil (7) und der vierte Tragflügelteil (8) an einer jeweiligen Stirnseite jeweils ein Fahrwerksrad aufweisen, welche Stirnseiten für einen vertikalen Startvorgang und einen vertikalen Landevorgang dadurch gen Nadir gerichtet ist, dass der jeweilige Tragflügelteil voll ausgeschwenkt ist.

10. Luftfahrzeug (1) nach einem der vorangehenden Ansprüche, wobei die Kommunikationseinheit dazu ausgebildet ist, Regelsignale von einer externen Sendequelle zu empfangen.

11. Luftfahrzeug (1) nach einem der vorangehenden Ansprüche, weiterhin aufweisend eine in der Passagierkabine (9) angeordnete Sendeeinheit, wobei die Kommunikationseinheit dazu ausgebildet ist, Regelsignale von der Sendeeinheit zu empfangen.

12. Luftfahrzeug (1) nach Anspruch 11, wobei die Sendeeinheit dazu ausgebildet ist, zumindest eines aus: Regelsignalen, Antikollisionssystem-Warnsignalen, Wetterinformationssignalen, Navigationssignalen von einer externen Sendequelle zu empfangen.

13. Luftfahrzeug (1) nach einem der vorangehenden Ansprüche, wobei die Tragflügelteile (5,6,7,8) zur Steifigkeitserhöhung in ihrem Inneren eine Zellenstruktur aufweisen, wobei die Antriebsbatterie (13) in einer Zelle (12) der Zellenstruktur angeordnet ist.

14. Luftfahrzeug (1) nach einem der vorangehenden Ansprüche, wobei die Passagierkabine (9) eine Versorgerbatterie (21) aufweist und wobei der restliche Tragflügel auf seiner Oberfläche zumindest eine photovoltaische Zelle aufweist, die mit der Versorgerbatterie verbunden ist und zum Aufladen der Versorgerbatterie ausgebildet ist.

15. Luftfahrzeug (1) nach einem der vorangehenden Ansprüche, wobei der Propellermotor des dritten Tragflügelteils (7) und der Propellermotor des vierten Tragflügelteils (8) dazu ausgebildet sind, für den Horizontalflug ihre Rotationsrichtung umzukehren.

## Claims

1. Aircraft (1) suitable for vertical flight and for horizontal flight, wherein the aircraft has a passenger cabin (9) and an airfoil (3,4,5,6,7,8) adjoining a roof of the passenger cabin on both sides and having at least four airfoil portions (5,6,7,8), wherein each of the airfoil portions is designed to pivot out relative to the remaining airfoil (3, 4) about a respective pivot axis downwards and by means of the force of gravity acting on the airfoil portion, **characterized in that** each of the airfoil portions (5, 6, 7, 8) comprises the following:
at least one propeller (2) which is rotatably mounted in the airfoil portion about an axis of rotation and which is arranged with respect to the pivot axis opposite at least a major part of the airfoil portion, wherein the propeller is substantially perpendicular to a chord of the airfoil portion,
a propeller motor (15) designed to rotate the propeller,
a first planetary gear (17) for operative connection between the propeller and the propeller motor,
a cable winch (19) for resetting the pivoting of the airfoil portion **in that** the cable winch is designed for unwinding a cable (26), wherein a first cable end is attached to the cable winch and a second cable end is attached to the remaining airfoil (27),
a stepper motor designed to drive the cable winch,
at least one drive battery (13) designed to supply the propeller motor and the stepper motor with electrical power, wherein the drive battery is arranged in or on the airfoil portion in such a way that it can be replaced and/or charged there,
a communication unit designed to receive control signals, and
a control unit is configured, in each case depending on the control signals,
to control a pivot angle of the airfoil portion and
to control the rotation of the propeller.

2. Aircraft (1) according to claim 1, wherein each of the airfoil portions (5,6,7,8) is substantially semi-circular in shape such that a swing-out of the respective airfoil portion results in a semi-circular recess (11) in the remainder of the airfoil.

3. Aircraft (1) according to one of the preceding claims, wherein a second planetary gear is arranged for operative connection between the stepper motor and the cable winch.

4. Aircraft (1) according to one of the preceding claims, wherein the first planetary gear (17) is of two-stage design.

5. Aircraft (1) according to one of the preceding claims, further comprising a coolant circuit (24) having a coolant pump, wherein the coolant circuit is arranged for cooling at least one of: the drive battery (13), the propeller motor (15), the control unit and the stepper motor, and wherein the drive battery is arranged for supplying electrical power to the coolant pump.

6. Aircraft (1) according to one of the preceding claims, wherein the airfoil portions (5,6,7,8) have on their surfaces at least one photovoltaic cell connected to the drive battery (13) and designed to charge the drive battery.

7. Aircraft (1) according to one of the preceding claims, wherein the airfoil portions (5,6,7,8) are pivotable downwardly about the pivot axis by up to 90 degrees.

8. Aircraft (1) according to one of the preceding claims, wherein a first airfoil portion (5) and a second airfoil portion (6) are arranged in a front region of the airfoil, and a third airfoil portion (7) and a fourth airfoil portion (8) are arranged in a rear region of the airfoil, wherein the first airfoil portion and the third airfoil portion are arranged toward a first side (4) with respect to the passenger cabin (9), and the second airfoil portion and the fourth airfoil portion are arranged toward a second side (3) opposite to the first side with respect to the passenger cabin (9).

9. Aircraft (1) according to claim 8, wherein at least the third airfoil portion (7) and the fourth airfoil portion (8) each have a landing gear wheel on a respective end face, which end faces are directed toward nadir for a vertical take-off process and a vertical landing process in that the respective airfoil portion is fully pivoted out.

10. Aircraft (1) according to one of the preceding claims, wherein the communication unit is designed to receive control signals from an external transmission source.

11. Aircraft (1) according to one of the preceding claims, further comprising a transmitter unit arranged in the passenger cabin (9), wherein the communication unit is adapted to receive control signals from the transmitter unit.

12. Aircraft (1) according to claim 11, wherein the transmitter unit is designed to receive at least one of: control signals, anti-collision system warning signals, weather information signals, navigation signals from an external transmission source.

13. Aircraft (1) according to one of the preceding claims, wherein the airfoil portions (5,6,7,8) have a cell structure in their interior for increasing stiffness, wherein the drive battery (13) is arranged in a cell (12) of the cell structure.

14. Aircraft (1) according to one of the preceding claims, wherein the passenger cabin (9) comprises a supply battery (21) and wherein the remaining airfoil comprises on its surface at least one photovoltaic cell connected to the supply battery and designed to charge the supply battery.

15. Aircraft (1) according to one of the preceding claims, wherein the propeller motor of the third airfoil portion (7) and the propeller motor of the fourth airfoil portion (8) are adapted to reverse their direction of rotation for horizontal flight.

## Revendications

1. Aéronef (1) adapté au vol vertical et au vol horizontal, lequel aéronef présente une cabine de passagers (9) et une aile portante (3, 4, 5, 6, 7, 8) qui se raccorde des deux côtés à un toit de la cabine de passagers et qui comporte au moins quatre parties d'aile portante (5, 6, 7, 8), chacune des parties d'aile portante étant conçue de manière à pouvoir pivoter vers le bas par rapport au reste de l'aile portante (3, 4) autour d'un axe de pivotement respectif et au moyen de la force de gravité agissant sur la partie d'aile portante, **caractérisé en ce que** chacune des parties d'aile portante (5, 6, 7, 8) présente ce qui suit :
au moins une hélice (2) qui est montée dans la partie d'aile portante de manière à pouvoir tourner autour d'un axe de rotation et qui est disposée en face d'au moins une grande partie de la partie d'aile portante par rapport à l'axe de pivotement, laquelle hélice est sensiblement perpendiculaire à une corde de profil de la partie d'aile portante,
un moteur d'hélice (15) conçu pour faire tourner l'hélice,
un premier engrenage planétaire (17) pour la liaison active entre l'hélice et le moteur d'hélice,
un treuil à câble (19) conçu pour rappeler le pivotement de la partie d'aile portante par le fait que le treuil à câble est conçu pour dérouler un câble (26), une première extrémité de câble étant fixée au treuil à câble et une deuxième extrémité de câble étant fixée au reste de l'aile portante (27),
un moteur pas à pas conçu pour entraîner le treuil à câble,
au moins une batterie de propulsion (13) conçue pour alimenter le moteur d'hélice et le moteur pas à pas en énergie électrique, la batterie de propulsion étant disposée dans ou sur la partie d'aile portante de manière à pouvoir y être remplacée et/ou rechargée,
une unité de communication conçue pour recevoir des signaux de régulation, et
une unité de régulation conçue, chaque fois en fonction des signaux de régulation,
pour réguler un angle de pivotement de la partie d'aile portante et
pour réguler la rotation de l'hélice.

2. Aéronef (1) selon la revendication 1, dans lequel chacune des parties d'aile portante (5, 6, 7, 8) est conçue sensiblement en forme de demi-cercle, de sorte qu'un pivotement de la partie d'aile portante respective produit un évidement (11) en forme de demi-cercle dans le reste de l'aile portante.

3. Aéronef (1) selon l'une des revendications précédentes, dans lequel un deuxième engrenage planétaire est disposé pour la liaison active entre le moteur pas à pas et le treuil à câble.

4. Aéronef (1) selon l'une des revendications précédentes, dans lequel le premier engrenage planétaire (17) est conçu à deux étages.

5. Aéronef (1) selon l'une des revendications précédentes, présentant en outre un circuit de refroidissement (24) avec une pompe de refroidissement, lequel circuit de refroidissement est disposé pour refroidir au moins un élément parmi : la batterie de propulsion (13), le moteur d'hélice (15), l'unité de régulation et le moteur pas à pas, et la batterie de propulsion étant conçue pour alimenter la pompe de refroidissement en énergie électrique.

6. Aéronef (1) selon l'une des revendications précédentes, dans lequel les parties d'aile portante (5, 6, 7, 8) présentent sur leurs surfaces au moins une cellule photovoltaïque reliée à la batterie de propulsion (13) et conçue pour recharger la batterie de propulsion.

7. Aéronef (1) selon l'une des revendications précédentes, dans lequel les parties d'aile portante (5, 6, 7, 8) peuvent pivoter vers le bas de jusqu'à 90 degrés autour de l'axe de pivotement.

8. Aéronef (1) selon l'une des revendications précédentes, dans lequel une première partie d'aile portante (5) et une deuxième partie d'aile portante (6) sont disposées dans une zone avant de l'aile portante, et une troisième partie d'aile portante (7) et une quatrième partie d'aile portante (8) sont disposées dans une zone arrière de l'aile portante, la première partie d'aile portante et la troisième partie d'aile portante étant disposées d'un premier côté (4) par rapport à la cabine de passagers (9) et la deuxième partie d'aile portante et la quatrième partie d'aile portante étant disposées d'un deuxième côté (3), opposé au premier côté, par rapport à la cabine de passagers (9).

9. Aéronef (1) selon la revendication 8, dans lequel au moins la troisième partie d'aile portante (7) et la quatrième partie d'aile portante (8) présentent chacune une roue de train d'atterrissage sur une face frontale respective, lesquelles faces frontales sont dirigées vers le nadir pour une opération de décollage vertical et une opération d'atterrissage vertical par le fait que la partie d'aile portante respective est entièrement pivotée.

10. Aéronef (1) selon l'une des revendications précédentes, dans lequel l'unité de communication est conçue pour recevoir des signaux de régulation d'une source d'émission externe.

11. Aéronef (1) selon l'une des revendications précédentes, présentant en outre une unité d'émission disposée dans la cabine de passagers (9), l'unité de communication étant conçue pour recevoir des signaux de régulation de l'unité d'émission.

12. Aéronef (1) selon la revendication 11, dans lequel l'unité d'émission est conçue pour recevoir des signaux de régulation, des signaux d'alerte de système anticollision, des signaux d'informations météorologiques et/ou des signaux de navigation provenant d'une source d'émission externe.

13. Aéronef (1) selon l'une des revendications précédentes, dans lequel les parties d'aile portante (5, 6, 7, 8) présentent à l'intérieur une structure cellulaire pour augmenter la rigidité, la batterie de propulsion (13) étant disposée dans une cellule (12) de la structure cellulaire.

14. Aéronef (1) selon l'une des revendications précédentes, dans lequel la cabine de passagers (9) présente une batterie auxiliaire (21) et dans lequel le reste de l'aile portante présente sur sa surface au moins une cellule photovoltaïque reliée à la batterie auxiliaire et conçue pour recharger la batterie auxiliaire.

15. Aéronef (1) selon l'une des revendications précédentes, dans lequel le moteur d'hélice de la troisième partie d'aile portante (7) et le moteur d'hélice de la quatrième partie d'aile portante (8) sont conçus pour inverser leur sens de rotation pour le vol horizontal.
